# EUROPEAN PATENT APPLICATION

(11) **EP 4 530 438 A1**
(43) Date of publication of application: **02.04.2025**
(21) Application number: 24202269.7
(22) Date of filing: 24.09.2024
(51) Int. Cl.: F01D 21/00, G05B 23/02

(54) **SYSTEM AND METHOD FOR IDENTIFYING RUBBING CONDITIONS FOR ENGINE ROTATIONAL EQUIPMENT**

(30) Priority: 25.09.2023 US 202318372485
(71) Applicant: PRATT & WHITNEY CANADA CORP., Longueuil, Québec J4G 1A1 (CA)
(72) Inventor: PONTARELLI, Robert, (01BE5) Longueuil, J4G 1A1 (CA); BEAUCHESNE-MARTEL, Philippe, (01BE5) Longueuil, J4G 1A1 (CA)
(74) Representative: Dehns

(57) **Abstract**

An assembly for an aircraft propulsion system includes an engine (22), a rotation speed sensor (72B), and a controller (24). The engine (22) includes a rotational assembly (46). The rotational assembly (46) includes a bladed turbine rotor (54) and a shaft (50) configured for rotation about a rotational axis (44). The rotation speed sensor (72B) is disposed at the rotational assembly (46). The rotation speed sensor (72B) is configured to measure a rotation speed of the rotational assembly (46). The controller (24) is configured to monitor a rotational parameter of the rotational assembly (46) while the rotational assembly (46) is rotating. The rotational parameter is determined using the measured rotation speed from the rotation speed sensor (72B). The controller (24) is further configured to cause the processor (68) to identify a presence or an absence of a rubbing condition for the rotational assembly (46) by comparing the rotational parameter to an identification threshold for the rotational parameter. The presence of the rubbing condition is identified where the rotational parameter exceeds the identification threshold.

## Description

### TECHNICAL FIELD

This disclosure relates generally to engines configured for aircraft and, more particularly, to systems and methods for identifying rubbing conditions for engine rotational equipment.

### BACKGROUND OF THE ART

An engine for an aircraft propulsion system or another aircraft engine system (e.g., an auxiliary power unit (APU)) may generally include one or more rotational equipment assemblies configured to facilitate propulsion, electrical power generation, or other support functions for the aircraft. A rubbing condition of a rotational equipment assembly is an undesirable condition in which a rotating component of the rotational equipment assembly improperly rubs against another engine component during operation of the engine. Various systems and methods are known in the art for identifying rotational equipment assembly rubbing conditions. While these known systems and methods have various advantages, there is still room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, an assembly for an aircraft propulsion system includes an engine, a rotation speed sensor, and a controller. The engine includes a rotational assembly. The rotational assembly includes a bladed turbine rotor and a shaft configured for rotation about a rotational axis. The rotation speed sensor is disposed at the rotational assembly. The rotation speed sensor is configured to measure a rotation speed of the rotational assembly. The controller includes a processor in communication with a non-transitory memory storing instructions, which instructions when executed by the processor, cause the processor to monitor a rotational parameter of the rotational assembly while the rotational assembly is rotating. The rotational parameter is determined using the measured rotation speed from the rotation speed sensor. The instructions, when executed by the processor, further cause the processor to identify a presence or an absence of a rubbing condition for the rotational assembly by comparing the rotational parameter to an identification threshold for the rotational parameter. The presence of the rubbing condition is identified where the rotational parameter exceeds the identification threshold.

In an embodiment of the above, the instructions, when executed by the processor, may further cause the processor to determine an acceleration of the rotational assembly using the measured rotation speed and determine the identification threshold by selecting the identification threshold from a plurality of identification thresholds stored in memory based on the determined acceleration.

In a further embodiment of any of the above, each of the rotational parameter and the identification threshold may be acceleration values for the rotational assembly.

In a further embodiment of any of the above, the rotational parameter and the identification threshold may be rate of change of acceleration values for the rotational assembly.

In a further embodiment of any of the above, the instructions, when executed by the processor, may further cause the processor to identify the presence or the absence of the rubbing condition for only a subset of a rotation speed range of the rotational assembly.

In a further embodiment of any of the above, the engine may include a second rotational assembly. The second rotational assembly may include a bladed second turbine rotor and a second shaft configured for rotation about the rotational axis. The assembly may further include a second rotation speed sensor disposed at the second rotational assembly. The second rotation speed sensor may be configured to measure a second rotation speed of the second rotational assembly. The instructions, when executed by the processor, may further cause the processor to monitor a second rotational parameter of the second rotational assembly while the second rotational assembly is rotating. The second rotational parameter may be determined using the measured second rotation speed from the second rotation speed sensor. The instructions, when executed by the processor, may further cause the processor to determine a second identification threshold for the second rotational parameter and identify a presence or an absence of a rubbing condition for the second rotational assembly by comparing the second rotational parameter to the second identification threshold. The presence of the rubbing condition for the second rotational assembly may be identified where the second rotational parameter exceeds the second identification threshold.

In a further embodiment of any of the above, the shaft and the second shaft may be concentric.

In a further embodiment of any of the above, the instructions, when executed by the processor, may further cause the processor to identify a cause of the presence of the rubbing condition for one or both of the rotational assembly and the second rotational assembly.

In a further embodiment of any of the above, the instructions, when executed by the processor, may further cause the processor to identify the cause as a shaft-to-shaft rubbing condition where the presence of the rubbing condition is identified for both of the rotational assembly and the second rotational assembly.

In a further embodiment of any of the above, the instructions, when executed by the processor, may further cause the processor to identify the cause as a shaft-to-structure rubbing condition where the presence of the rubbing condition is identified for only one of the rotational assembly or the second rotational assembly.

According to another aspect of the present disclosure, a method for identifying a rubbing condition for a rotational assembly of an engine for an aircraft is provided. The method includes monitoring a rotational parameter of the rotational assembly while the rotational assembly is rotating by measuring a rotation speed of the rotational assembly and determining the rotational parameter using the measured rotation speed, determining an identification threshold for the rotational parameter using an acceleration of the rotational assembly, and identifying a presence or an absence of a rubbing condition for the rotational assembly by comparing the rotational parameter to the identification threshold. The presence of the rubbing condition is identified where the rotational parameter exceeds the identification threshold.

In an embodiment of the above, determining the identification threshold for the rotational parameter may include selecting the identification threshold from a plurality of identification thresholds stored in memory based on the acceleration.

In a further embodiment of any of the above, the plurality of identification thresholds may include at least a first identification threshold and a second identification threshold. The determined identification threshold may be the first identification threshold for a first range of values of the acceleration. The determined identification threshold may be the second identification threshold for a second range of values of the acceleration. The first range of values may be different than the second range of values.

In a further embodiment of any of the above, the first identification threshold may be an acceleration value and the second identification threshold may be a rate of change of acceleration value.

In a further embodiment of any of the above, each of the first identification threshold and the second identification threshold may be a rate of change of acceleration value. The first identification threshold may have a first rate of change of acceleration value. The second identification threshold may have a second rate of change of acceleration value. The first rate of change of acceleration value may be different than the second rate of change of acceleration value.

According to another aspect of the present disclosure, an assembly for an aircraft propulsion system includes an engine, a first rotation speed sensor, a second rotation speed sensor, and a controller. The engine includes a first rotational assembly and a second rotational assembly. The first rotational assembly and the second rotational assembly are concentric and configured for rotation about a rotational axis. The first rotation speed sensor is disposed at the first rotational assembly. The first rotation speed sensor is configured to measure a first rotation speed of the first rotational assembly. The second rotation speed sensor is disposed at the second rotational assembly. The second rotation speed sensor is configured to measure a second rotation speed of the second rotational assembly. The controller includes a processor in communication with a non-transitory memory storing instructions, which instructions when executed by the processor, cause the processor to monitor a first rotational parameter of the first rotational assembly and a second rotational parameter of the second rotational assembly using the first rotation speed sensor and the second rotation speed sensor, respectively, and determine a first identification threshold for the first rotational parameter using a first acceleration of the first rotational assembly. The first acceleration is determined using the first rotation speed sensor. The instructions, when executed by the processor, further cause the processor to determine a second identification threshold for the second rotational parameter using a second acceleration of the second rotational assembly. The second acceleration is determined using the second rotation speed sensor. The instructions, when executed by the processor, further cause the processor to identify a presence or an absence of a rubbing condition for the first rotational assembly by comparing the first rotational parameter to the first identification threshold, identify a presence or an absence of a rubbing condition for the second rotational assembly by comparing the second rotational parameter to the second identification threshold, and identify a cause of the rubbing condition for one or both of the first rotational assembly or the second rotational assembly using the identified presence or absence of the rubbing condition for the first rotational assembly and the identified presence or absence of the rubbing condition for the second rotational assembly.

In an embodiment of the above, determining the first identification threshold for the first rotational parameter may include selecting the first identification threshold from a plurality of first identification thresholds stored in memory based on the first acceleration.

In a further embodiment of any of the above, each of the first rotational parameter and the first identification threshold may be acceleration values for the first rotational assembly.

In a further embodiment of any of the above, the first rotational parameter and the first identification threshold may be rate of change of acceleration values for the first rotational assembly.

In a further embodiment of any of the above, the instructions, when executed by the processor, may further cause the processor to identify the presence or the absence of the rubbing condition for the first rotational assembly for only a subset of a rotation speed range of the first rotational assembly.

The present disclosure, and all its aspects, embodiments and advantages associated therewith will become more readily apparent in view of the detailed description provided below, including the accompanying drawings.

### DESCRIPTION OF THE DRAWINGS

FIG. 1 illustrates a cutaway, side view of a gas turbine engine for an aircraft propulsion system, in accordance with one or more embodiments of the present disclosure.
FIG. 2 illustrates a flow chart depicting a method for identifying a rubbing condition for an engine rotational assembly, in accordance with one or more embodiments of the present disclosure.
FIG. 3 illustrates rotation speed and acceleration for a rotational assembly experiencing a rubbing condition, in accordance with one or more embodiments of the present disclosure.
FIG. 4 illustrates rotation speed, acceleration, and rate of change of acceleration for a rotational assembly experiencing a rubbing condition, in accordance with one or more embodiments of the present disclosure.
FIG. 5 illustrates rotation speed, acceleration, and rate of change of acceleration for a rotational assembly experiencing a rubbing condition, in accordance with one or more embodiments of the present disclosure.
FIG. 6 illustrates rate of change of acceleration for two rotational assemblies each experiencing a rubbing condition, in accordance with one or more embodiments of the present disclosure.

### DETAILED DESCRIPTION

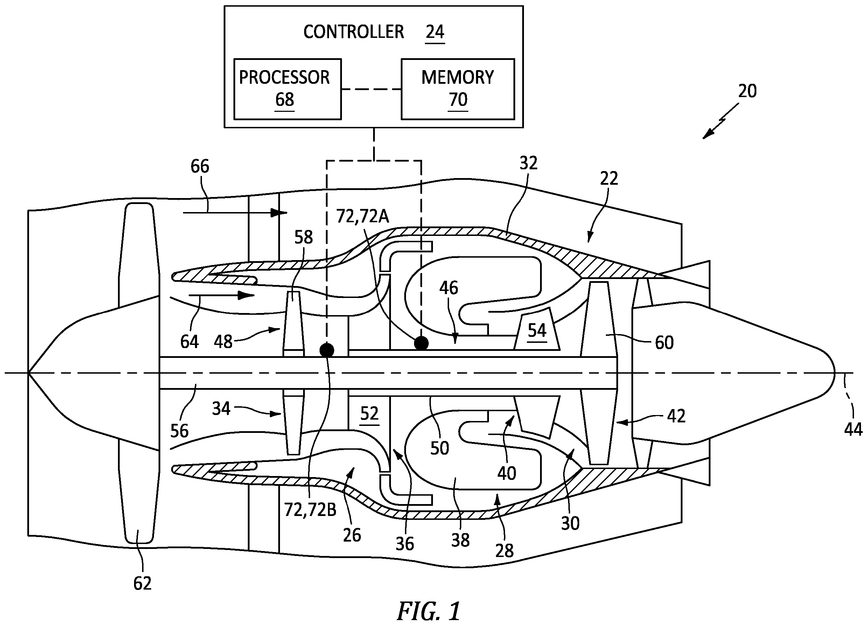

FIG. 1 schematically illustrates a propulsion system 20 for an aircraft. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone). The propulsion system 20 of FIG. 1 includes a gas turbine engine 22 and a controller 24.

The gas turbine engine 22 of FIG. 1 is configured as a multi-spool turbofan gas turbine engine. While the following description and accompanying drawings may refer to the turbofan gas turbine engine of FIG. 1 as an example, it should be understood that aspects of the present disclosure may be equally applicable to other types of gas turbine engines including, but not limited to, a turboshaft gas turbine engine, a turbofan gas turbine engine, a turbojet gas turbine engine, a propfan gas turbine engine, or an open rotor gas turbine engine. Moreover, aspects of the present disclosure may be equally applicable to aircraft engines which are not part of a propulsion system (e.g., an auxiliary power unit (APU) or are not gas turbine engines such as, but not limited to intermittent combustion engines (e.g., a reciprocating engine such as a piston engine or a rotary engine).

The gas turbine engine 22 of FIG. 1 includes a compressor section 26, a combustor section 28, a turbine section 30, and an engine static structure 32. The compressor section 26 includes a low-pressure compressor 34 and a high-pressure compressor 36. The combustor section 28 includes a combustor 38 (e.g., an annular combustor). The turbine section 30 includes a high-pressure turbine 40 and a low-pressure turbine 42. The gas turbine engine 22 sections 26, 28, 30 of FIG. 1 are sequentially arranged along an axial centerline 44 (e.g., a rotational axis) of the gas turbine engine 22. The engine static structure 32 may include, for example, one or more engine cases for the gas turbine engine 22. The engine static structure 32 may additionally include cowlings, bearing assemblies, or other structural components of the gas turbine engine 22. The engine static structure 32 houses and structurally supports the engine sections 26, 28, 30.

Components of the engine sections 26, 28, 30 form a first rotational assembly 46 (e.g., a high-pressure spool) and a second rotational assembly 48 (e.g., a low-pressure spool). The first rotational assembly 46 and the second rotational assembly 48 are mounted for rotation about the axial centerline 44 relative to the engine static structure 32.

The first rotational assembly 46 includes a first shaft 50, a bladed first compressor rotor 52 for the high-pressure compressor 36, and a bladed first turbine rotor 54 for the high-pressure turbine 40. The first shaft 50 interconnects the bladed compressor rotor 52 and the bladed first turbine rotor 54.

The second rotational assembly 48 includes a second shaft 56, a bladed second compressor rotor 58 for the low-pressure compressor 34, and a bladed second turbine rotor 60 for the low-pressure turbine 42. The second shaft 56 may additionally be directly or indirectly connected to a bladed fan rotor 62 of the gas turbine engine 22. For example, the second shaft 56 may be connected to the bladed fan rotor 62 by one or more gear assemblies (not shown) configured to drive the bladed fan rotor 62 at a reduced rotational speed relative to the second shaft 56. The first shaft 50 and the second shaft 56 are concentric and rotate about the axial centerline 44. The present disclosure, however, is not limited to concentric configurations of the first shaft 50 and the second shaft 56 and the first shaft 50 and the second shaft 56 may alternatively be configured for rotation about discrete rotational axes.

During operation of the gas turbine engine 22, ambient air enters the gas turbine engine 22 and is directed through the engine sections 26, 28, 30 along a core flow path 64. The air within the core flow path 64 may be referred to as "core air." The core air is compressed in the low-pressure compressor 34 and the high-pressure compressor 36 by the bladed second compressor rotor 58 and the bladed first compressor rotor 52, respectively, and directed into a combustion chamber of the combustor 38. Fuel is injected into the combustion chamber and mixed with the compressed core air to provide a fuel-air mixture. This fuel-air mixture is ignited and combustion products thereof, which may be referred to as "core combustion gas," flow through and sequentially cause the bladed first turbine rotor 54 and the bladed second turbine rotor 60 to rotate. The rotation of the bladed first turbine rotor 54 and the bladed second turbine rotor 60 respectively drives rotation of the first rotational assembly 46 and the second rotational assembly 48. Rotation of the second rotational assembly 48 further drives rotation of the bladed fan rotor 62 to direct air into the core flow path 64 as well as an annular bypass flow path 66 surrounding the engine sections 26, 28, 30.

The controller 24 includes a processor 68 connected in signal communication with memory 70. The processor 68 may include any type of computing device, computational circuit, processor(s), CPU, computer, or the like capable of executing a series of instructions that are stored in the memory 70. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the propulsion system 20 and its components to accomplish the same algorithmically and/or by coordination of the propulsion system 20 components. The memory 70 may include a single memory device or a plurality of memory devices (e.g., a computer-readable storage device that can be read, written, or otherwise accessed by a general purpose or special purpose computing device), including any processing electronics and/or processing circuitry capable of executing instructions. The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 24. The controller 24 may include, or may be in communication with, an input device that enables a user to enter data and/or instructions, and may include, or be in communication with, an output device configured, for example to display information (e.g., a visual display or a printer), or to transfer data, etc. Communications between the controller 24 and other electrical and/or electronic components (e.g., controllers, sensors, etc.) may be via a hardwire connection or via a wireless connection. A person of skill in the art will recognize that portions of the controller 24 may assume various forms (e.g., digital signal processor, analog device, etc.) capable of performing the functions described herein.

The controller 24 may form or otherwise be part of an electronic engine controller (EEC) for the gas turbine engine 22. For example, the EEC may control operating parameters of the gas turbine engine 22 such as, but not limited to, fuel flow, stator vane position (e.g., variable compressor inlet guide vane (IGV) position), compressor air bleed valve position, shaft (e.g., first shaft 50 and/or second shaft 56) torque and/or rotation speed, etc. so as to control an engine power or performance of the gas turbine engine 22. For example, the EEC may modulate fuel flow to the combustor 38 to obtain a desired output power of the gas turbine engine 22. In some embodiments, the EEC may be part of a full authority digital engine control (FADEC) system for the propulsion system 20.

The controller 24 includes or is otherwise connected in communication (e.g., signal communication) with one or more rotation speed sensors 72. For example, the rotation speed sensors 72 of FIG. 1 include a first rotation speed sensor 72A for the first shaft 50 and a second rotation speed sensor 72B for the second shaft 56. The first rotation speed sensor 72A and the second rotation speed sensor 72B are configured to measure a rotation speed of the first shaft 50 and the second shaft 56, respectively, and generate an output signal representative of the measured rotation speed. The rotation speed sensors 72 may be configured, for example, as eddy-current proximity sensors, magnetic rotation speed sensors, Hall-effect rotation speed sensors, or the like. The present disclosure is not limited to any particular configuration for the rotation speed sensors 72.

During operation of an engine, such as the gas turbine engine 22, a component of rotational assembly may rub against one or more other components of the gas turbine engine 22 in a way that is unintended by the design of the engine. A rubbing condition of a rotational assembly is an undesired event which may result in damage to components of a rotational assembly or may otherwise compromise the structural integrity of the rotational assembly. For example, the first shaft 50 may rub against a static structure of the gas turbine engine 22 such as, but not limited to, the engine static structure 32. Alternatively, for example, the first shaft 50 may rub against the second shaft 56. A rubbing condition may occur for a variety of reasons including, for example, vibration due to rotor imbalance (e.g., rotor imbalance caused by a rotor blade fracture). Imbalance on a given rotational assembly rotor, at least in some engines, may create a significant dynamic response on its shaft at a particular rotation speed or range of rotation speeds, leading to the rubbing condition. This rubbing condition can weaken the shaft or another component of the rotational assembly and, in some cases, can lead to failure of the shaft (e.g., shaft shear) or other component of the rotational assembly.

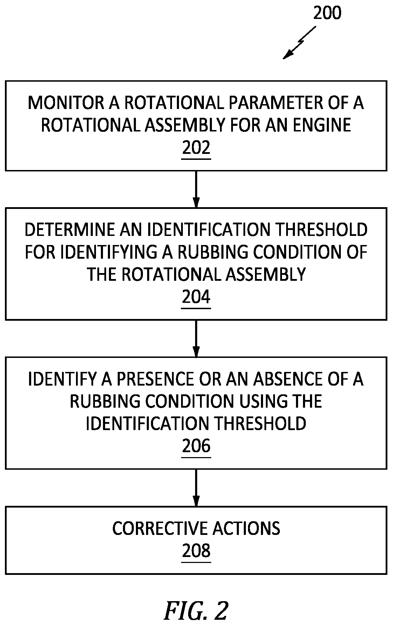

Referring to FIGS. 1 and 2, a Method 200 for identifying an engine rotational assembly rubbing condition is provided. FIG. 2 illustrates a flowchart for the Method 200. The Method 200 may be performed for the gas turbine engine 22 and its rotational assemblies 46, 48, as described herein. The controller 24 may be used to execute or control one or more steps of the Method 200 for the gas turbine engine 22. For example, the processor 68 may execute instructions stored in memory 70, thereby causing the controller 24 and/or its processor 68 to execute or otherwise control one or more steps of the Method 200. However, it should be understood that the Method 200 is not limited to use with the gas turbine engine 22 or the controller 24 described herein. Moreover, aspects of the present disclosure may be equally applicable to engines including a single rotational assembly, three rotational assemblies, etc. Unless otherwise noted herein, it should be understood that the steps of Method 200 are not required to be performed in the specific sequence in which they are discussed below and, in some embodiments, the steps of Method 200 may be performed separately or simultaneously.

Step 202 includes monitoring (e.g., continuously monitoring) rotation parameters of the first rotational assembly 46 (e.g., the first shaft 50) and/or the second rotational assembly 48 (e.g., the second shaft 56) to identify a rubbing condition for the first rotational assembly 46 and/or the second rotational assembly 48. For example, the controller 24 may monitor rotation parameters for each of the first shaft 50 and the second shaft 56 to identify a presence or an absence of a rubbing condition for each of the first rotational assembly 46 and the second rotational assembly 48. The rotation parameters may include a rotation speed for the first rotational assembly 46 and/or the second rotational assembly 48 (e.g., the first shaft 50 and/or the second shaft 56) measured or otherwise obtained, for example, by the rotation speed sensors 72 (e.g., the first rotation speed sensor 72A and/or the second rotation speed sensor 72B). The rotation parameters may additionally include rotation parameters which can be measured, calculated, estimated, or otherwise derived from the rotation speeds obtained for the first rotational assembly 46 and/or the second rotational assembly 48 such as, but not limited to, a rotational acceleration (e.g., positive acceleration and negative acceleration (deceleration)) and/or a rate of change of rotational acceleration.

Step 204 includes, optionally, determining an identification threshold for identifying the presence or the absence of the rubbing condition for the first rotational assembly 46 and/or the second rotational assembly 48. The controller 24 may identify one of a plurality of identification thresholds based on an operating condition of the gas turbine engine 22 or its rotational assemblies 46, 48. For example, the controller 24 may identify one of a plurality of identification thresholds based on a shaft rotational acceleration value for the first shaft 50 and/or the second shaft 56. The controller 24 may identify a first identification threshold for a first range of shaft rotational acceleration values. This first range of shaft rotational acceleration values may identify, for example, a steady state condition in which a rotation speed of the first rotational assembly 46 and/or the second rotational assembly 48 is constant or substantially constant. The controller 24 may identify a second identification threshold for a second range of shaft rotational acceleration values which is greater than the first range of shaft rotational acceleration values. This second range of shaft rotational acceleration values may identify, for example, a low-acceleration transient condition in which a rotation speed of the first rotational assembly 46 and/or the second rotational assembly 48 is increasing or decreasing. The controller 24 may identify a third identification threshold for a third range of shaft rotational acceleration values which is greater than the second range of shaft rotational acceleration values. This third range of shaft rotational acceleration values may identify, for example, a high-acceleration transient condition in which a rotation speed of the first rotational assembly 46 and/or the second rotational assembly 48 is increasing or decreasing at a rate which is greater than for the second identification threshold. The present disclosure, however, is not limited to the aforementioned exemplary plurality of identification thresholds or associated shaft rotational acceleration value ranges. In some embodiments, a single identification threshold may be used and determining a particular identification threshold may not be necessary.

The controller 24 may alternatively identify one of a plurality of identification thresholds based on a target change in rotation speed for the first shaft 50 and/or the second shaft 56. For example, the controller 24 may calculate or otherwise determine an expected shaft rotational acceleration value for the first shaft 50 and/or the second shaft 56 based on a current measured speed of the first shaft 50 and/or the second shaft 56 and a target speed for the first shaft 50 and/or the second shaft 56, respectively. The controller 24 may identify one of a plurality of identification thresholds for the first shaft 50 and/or the second shaft 56 based on the expected shaft rotational acceleration value.

Each identification threshold of the plurality of identification thresholds may have a rotational parameter and/or a value which is different than one or more other identification thresholds of the plurality of identification thresholds. For example, each identification threshold may be a rotational acceleration value (e.g., positive acceleration and negative acceleration (deceleration)) or a rate of change of rotational acceleration value. Referring again to the aforementioned first identification threshold, second identification threshold, and third identification threshold, for example, each of these thresholds may have a rotational parameter and/or a value which is different than another of the first identification threshold, second identification threshold, and third identification threshold. The first identification threshold may be a rotational acceleration value while the second identification threshold and the third identification threshold may be a rate of change of rotational acceleration value. The rate of change of rotational acceleration value of the third identification threshold may be greater than the rate of change of rotational acceleration value for the second identification threshold, for example, to account for greater rotational assembly 46, 48 rotational acceleration.

The rotational parameters and values for each of the identification thresholds may be selected based, for example, on the configuration of the gas turbine engine 22 and its rotational assemblies 46, 48 to indicate that a rubbing condition for one or both of the rotational assemblies 46, 48 is likely. Routine experimentation and/or analysis may be performed by a person of ordinary skill in the art to determine suitable rotational parameters and values of the different identification thresholds for a particular engine and/or rotational assembly application, in accordance with and as informed by one or more aspects of the present disclosure.

Step 206 includes identifying a presence or an absence of a rubbing condition for the first rotational assembly 46 and/or the second rotational assembly 48. The controller 24 may identify the presence or the absence of the rubbing condition by comparing a measured or otherwise determined rotational parameter of the first rotational assembly 46 and/or the second rotational assembly 48 to an identification threshold for the first rotational assembly 46 and/or the second rotational assembly 48, respectively. The controller 24 may identify the presence of a rubbing condition for the first rotational assembly 46 and/or the second rotational assembly 48 when a value (e.g., an absolute value) of the respective rotational parameter of the first rotational assembly 46 and/or the second rotational assembly 48 exceeds (e.g., is greater than or equal to a value (e.g., an absolute value) of) the identification threshold for the first rotational assembly 46 and/or the second rotational assembly 48. The controller 24 may identify the absence of a rubbing condition for the first rotational assembly 46 and/or the second rotational assembly 48 when a value (e.g., an absolute value) of the respective rotational parameter of the first rotational assembly 46 and/or the second rotational assembly 48 does not exceed (e.g., is less than or equal to a value (e.g., an absolute value) of) the identification threshold for the first rotational assembly 46 and/or the second rotational assembly 48.

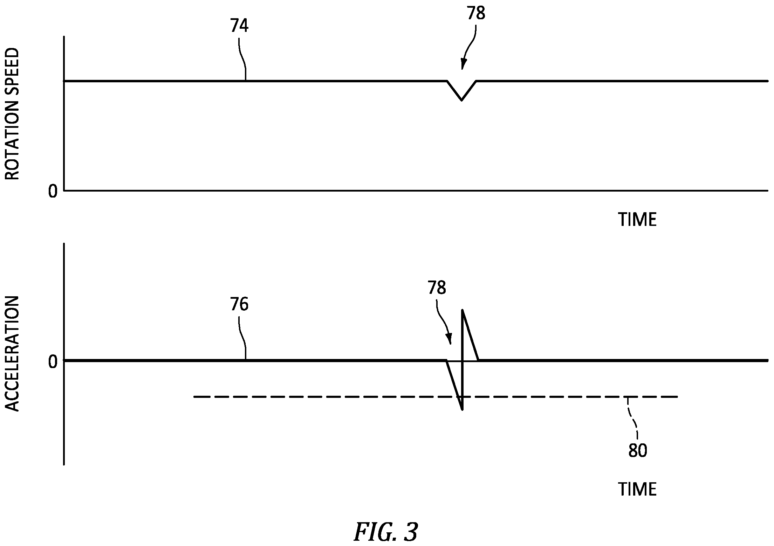

FIG. 3 illustrates a rotation speed 74 and an acceleration 76 for a rotational assembly, such as the first rotational assembly 46 or the second rotational assembly 48, experiencing a rubbing condition 78. The rotation speed 74 and the acceleration 76 of FIG. 3 may be generally representative of a steady-state rotational condition of the rotational assembly. As can be seen in FIG. 3, for example, the rubbing condition 78 causes a sharp drop in a rotation speed 74 of the rotational assembly and an accompanying sharp increase in acceleration 76 (e.g., negative acceleration) of the rotational assembly. The rotational assembly may subsequently return to its previous rotation speed 74 following the occurrence of the rubbing condition 78. The controller 24 may identify a presence or an absence of a rubbing condition by comparing the acceleration 76 (e.g., the rotational parameter) of the rotational assembly to an identification threshold 80, which identification threshold 80 is an acceleration value. The controller 24 may identify the presence of the rubbing condition 78 of FIG. 3 where the acceleration 76 (e.g., an absolute value of the acceleration 76) is greater than or equal to the identification threshold 80 (e.g., an absolute value of the identification threshold 80).

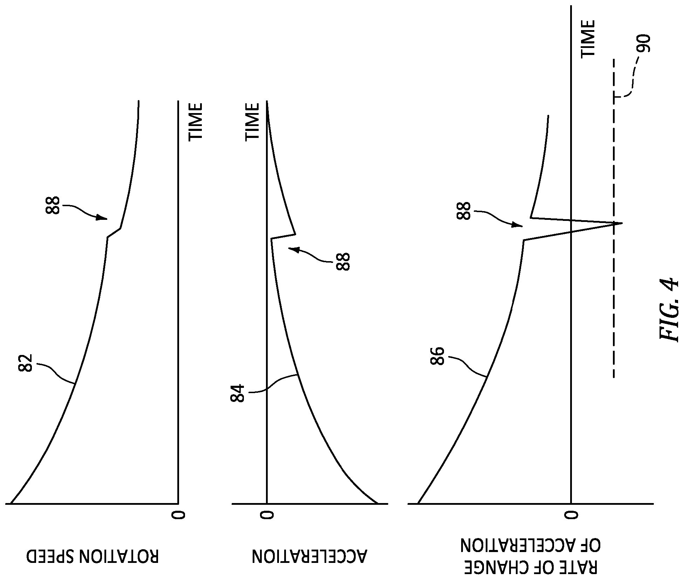

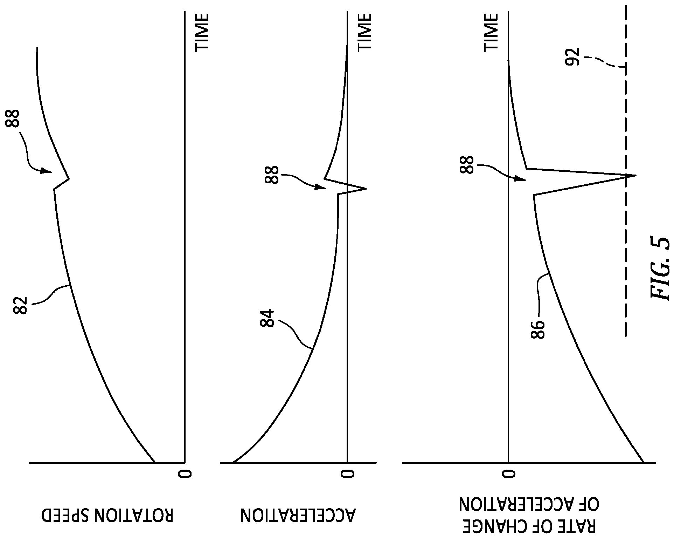

FIGS. 4 and 5 illustrate a rotation speed 82, an acceleration 84, and a rate of change of acceleration 86 for a rotational assembly, such as the first rotational assembly 46 or the second rotational assembly 48, experiencing a rubbing condition 88. The rotation speed 82, the acceleration 84, and the rate of change of acceleration 86 of FIG. 4 may be generally representative of a deceleration transient of the rotational assembly. The rotation speed 82, the acceleration 84, and the rate of change of acceleration 86 of FIG. 5 may be generally representative of an acceleration transient of the rotational assembly.

As can be seen in FIG. 4, for example, the rubbing condition 88 causes a sharp drop in a rotation speed 82 of the rotational assembly and an accompanying sharp, increasingly negative change in acceleration 84 of the rotational assembly. Correspondingly, the rate of change of acceleration 86 exhibits a sharp, negative change in value from a positive rate of change of acceleration value to a negative rate of change of acceleration value. The controller 24 may identify a presence or an absence of a rubbing condition by comparing the rate of change of acceleration 86 (e.g., the rotational parameter) of the rotational assembly to an identification threshold 90, which identification threshold 90 is a rate of change of acceleration value. The controller 24 may identify the presence of the rubbing condition 88 of FIG. 4 where the rate of change of acceleration 86 (e.g., an absolute value of the rate of change of acceleration 86) is greater than or equal to the identification threshold 90 (e.g., an absolute value of the identification threshold 90).

As can be seen in FIG. 5, for example, the rubbing condition 88 causes a sharp drop in a rotation speed 82 of the rotational assembly and an accompanying sharp, negative change in acceleration 84 of the rotational assembly from a positive acceleration value to a negative acceleration value. Correspondingly, the rate of change of acceleration 86 exhibits a sharp, increasingly negative change in value. The controller 24 may identify a presence or an absence of a rubbing condition by comparing the rate of change of acceleration 86 (e.g., the rotational parameter) of the rotational assembly to an identification threshold 92, which identification threshold 90 is a rate of change of acceleration value. The identification threshold 92 identified by the controller 24 for an acceleration transient (e.g., the acceleration transient of FIG. 5) may have a value which is different than the identification threshold 90 identified by the controller 24 for a deceleration transient (e.g., the deceleration transient of FIG. 4). The controller 24 may identify the presence of the rubbing condition 88 of FIG. 5 where the rate of change of acceleration 86 (e.g., an absolute value of the rate of change of acceleration 86) is greater than or equal to the identification threshold 92 (e.g., an absolute value of the identification threshold 92).

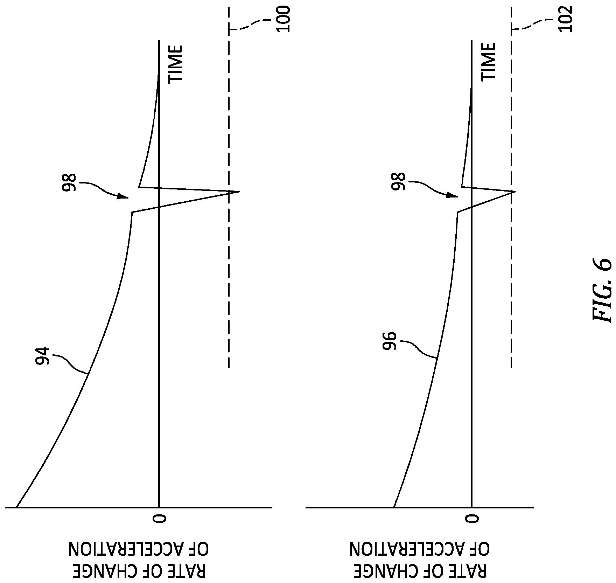

FIG. 6 illustrates a first rate of change of acceleration 94 for a first rotational assembly (e.g., the first rotational assembly 46) and a second rate of change of acceleration 96 for a second rotational assembly (e.g., the second rotational assembly 48). The first rotational assembly and the second rotational assembly represented in FIG. 6 are concentric and rotate about a same rotational axis. The first rate of change of acceleration 94 and the second rate of change of acceleration 96 of FIG. 6 are illustrative of a rubbing condition 98 in which the first rotational assembly rubs against the second rotational assembly (e.g., a "shaft-to-shaft" rubbing condition). As can be seen in FIG. 6, for example, the rubbing condition 98 causes a sharp, negative, and simultaneous or substantially simultaneous change in value of the first rate of change of acceleration 94 and the second rate of change of acceleration 96. The controller 24 may identify the presence of the rubbing condition 98 of FIG. 6 where the first rate of change of acceleration 94 (e.g., an absolute value of the first rate of change of acceleration 94) is greater than or equal to a first identification threshold 100 for the first rotational assembly and/or where the second rate of change of acceleration 96 (e.g., an absolute value of the second rate of change of acceleration 96) is greater than or equal to a second identification threshold 102 for the second rotational assembly.

For gas turbines engines, such as the gas turbine engine 22, including two or more rotational assemblies (e.g., spools), the controller 24 may identify a cause of an identified rubbing condition. For example, the controller 24 may identify the rubbing condition is between one of the rotational assemblies 46, 48 and the engine static structure 32 (e.g., a "shaft-to-structure" rubbing condition) or between the rotational assemblies 46, 48 themselves (e.g., a "shaft-to-shaft" rubbing condition), as previously discussed. The controller 24 may identify a shaft-to-structure rubbing condition where the controller 24 identifies the presence of a rubbing condition for one of the first rotational assembly 46 or the second rotational assembly 48 and an absence of a rubbing condition for the other of the first rotational assembly 46 or the second rotational assembly 48. The controller 24 may identify a shaft-to-shaft rubbing condition where the controller identifies the presence of a rubbing condition for both of the first rotational assembly 46 and the second rotational assembly 48.

Step 206 may include identifying the presence or the absence of a rubbing condition for particular rotation speeds of the first rotational assembly 46 and/or the second rotational assembly 48. A rotational assembly, such as the first rotational assembly 46 or the second rotational assembly 48, may experience resonance conditions for particular rotation speeds, which resonance conditions may substantially increase the likelihood of the rotational assembly experiencing a rubbing condition. Accordingly, the controller 24 may identify a presence or an absence of a rubbing condition for the first rotational assembly 46 and/or the second rotational assembly 48 only for one or more subsets of a rotation speed range (e.g., an entire rated rotation speed range) of the first rotational assembly 46 and/or the second rotational assembly 48. Outside of the one or more subsets, the controller 24 may not identify the presence or the absence of the rubbing condition. By operating to identify the presence or the absence of a rubbing condition only for the subsets of the rotation speed range for the first rotational assembly 46 and/or the second rotational assembly 48, the controller 24 may prevent or reduce the likelihood of false positives (e.g., incorrect identification of the presence of a rubbing condition) when the first rotational assembly 46 and/or the second rotational assembly 48 is operating at a rotation speed for which rubbing is unlikely or otherwise not a concern. Routine experimentation and/or analysis may be performed by a person of ordinary skill in the art to determine one or more subsets of rotational assembly rotation speeds for which resonance conditions increase the likelihood of a rubbing condition, in accordance with and as informed by one or more aspects of the present disclosure.

Step 208 includes taking one or more corrective actions in response to identification of the presence of a rubbing condition for the first rotational assembly 46 and/or the second rotational assembly 48. The controller 24 may generate a warning signal (e.g., an audible alarm, a warning light, etc.) for a pilot or other operator of an aircraft on which the propulsion system 20 (see FIG. 1) is installed. The warning signal may indicate the identification of the presence of the rubbing condition for the first rotational assembly 46 and/or the second rotational assembly 48. The warning signal may identify which of the first rotational assembly 46 and/or the second rotational assembly 48 has experienced the rubbing condition. The warning signal may also identify a cause of the rubbing condition (e.g., a shaft-to-shaft rubbing condition, a shaft-to-structure rubbing condition, etc.). In some cases, the controller 24 may initiate a shutdown of the gas turbine engine 22 (e.g., by stopping fuel flow to the combustor 38) in response to identification of the presence of a rubbing condition for the first rotational assembly 46 and/or the second rotational assembly 48.

The present disclosure facilitates improved engine dependability and safety by providing early identification of rotational assembly rubbing conditions which may immediately inhibit gas turbine engine operation or gradually degrade gas turbine engine components over time. Early identification of rotational assembly rubbing conditions may also facilitate reduced gas turbine engine maintenance costs by prompting inspection and repair of gas turbine engine components before substantial damage or degradation occurs.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An assembly for an aircraft propulsion system, the assembly comprising:
an engine (22) including a rotational assembly (46), wherein the rotational assembly (46) includes a bladed turbine rotor (54) and a shaft (50) configured for rotation about a rotational axis (44);
a rotation speed sensor (72A) disposed at the rotational assembly (46), wherein the rotation speed sensor (72A) is configured to measure a rotation speed of the rotational assembly (46); and
a controller (24) including a processor (68) in communication with a non-transitory memory (70) storing instructions, which instructions when executed by the processor (68), cause the processor (68) to:
monitor a rotational parameter of the rotational assembly (46) while the rotational assembly (46) is rotating, wherein the rotational parameter is determined using the measured rotation speed from the rotation speed sensor (72A); and
identify a presence or an absence of a rubbing condition for the rotational assembly (46) by comparing the rotational parameter to an identification threshold (80; 90; 92; 100) for the rotational parameter, wherein the presence of the rubbing condition is identified where the rotational parameter exceeds the identification threshold (80; 90; 92; 100).

2. The assembly of claim 1, wherein the instructions, when executed by the processor (68), further cause the processor (68) to:
determine an acceleration of the rotational assembly (46) using the measured rotation speed; and
determine the identification threshold (80; 90; 92; 100) by selecting the identification threshold (80; 90; 92; 100) from a plurality of identification thresholds (80; 90; 92; 100) stored in memory (70) based on the determined acceleration.

3. The assembly of claim 2, wherein:
each of the rotational parameter and the identification threshold (80) are acceleration values for the rotational assembly (46); or
the rotational parameter and the identification threshold (90; 92; 100) are rate of change of acceleration values for the rotational assembly (46).

4. The assembly of any preceding claim, wherein the instructions, when executed by the processor (68), further cause the processor (68) to identify the presence or the absence of the rubbing condition for only a subset of a rotation speed range of the rotational assembly (46).

5. The assembly of any preceding claim, wherein:
the engine (22) includes a second rotational assembly (48), wherein the second rotational assembly (48) includes a bladed second turbine rotor (60) and a second shaft (56) configured for rotation about the rotational axis (44);
the assembly further comprises a second rotation speed sensor (72B) disposed at the second rotational assembly (48), wherein the second rotation speed sensor (72B) is configured to measure a second rotation speed of the second rotational assembly (48); and
the instructions, when executed by the processor (68), further cause the processor (68) to:
monitor a second rotational parameter of the second rotational assembly (48) while the second rotational assembly (48) is rotating, wherein the second rotational parameter is determined using the measured second rotation speed from the second rotation speed sensor (72B);
determine a second identification threshold (102) for the second rotational parameter; and
identify a presence or an absence of a rubbing condition for the second rotational assembly (48) by comparing the second rotational parameter to the second identification threshold (102), wherein the presence of the rubbing condition for the second rotational assembly (48) is identified where the second rotational parameter exceeds the second identification threshold (102).

6. The assembly of claim 5, wherein the shaft (50) and the second shaft (56) are concentric.

7. The assembly of claim 5 or 6, wherein the instructions, when executed by the processor (68), further cause the processor (68) to identify a cause of the presence of the rubbing condition for the rotational assembly (46) and/or the second rotational assembly (48).

8. The assembly of any of claims 5 to 7, wherein the instructions, when executed by the processor (68), further cause the processor (68) to identify the cause as a shaft-to-shaft rubbing condition where the presence of the rubbing condition is identified for both of the rotational assembly (46) and the second rotational assembly (48).

9. The assembly of any of claims 5 to 7, wherein the instructions, when executed by the processor (68), further cause the processor (68) to identify the cause as a shaft-to-structure rubbing condition where the presence of the rubbing condition is identified for only one of the rotational assembly (46) or the second rotational assembly (48).

10. A method for identifying a rubbing condition for a rotational assembly (46) of an engine for an aircraft, the method comprising:
monitoring a rotational parameter of the rotational assembly (46) while the rotational assembly (46) is rotating by measuring a rotation speed of the rotational assembly (46) and determining the rotational parameter using the measured rotation speed;
determining an identification threshold (80; 90; 92; 100) for the rotational parameter using an acceleration of the rotational assembly (46); and
identifying a presence or an absence of a rubbing condition for the rotational assembly (46) by comparing the rotational parameter to the identification threshold (80; 90; 92; 100), wherein the presence of the rubbing condition is identified where the rotational parameter exceeds the identification threshold (80; 90; 92; 100).

11. The method of claim 10, wherein determining the identification threshold (80; 90; 92; 100) for the rotational parameter includes selecting the identification threshold (80; 90; 92; 100) from a plurality of identification thresholds (80; 90; 92; 100) stored in memory (70) based on the acceleration, optionally wherein the plurality of identification thresholds (80; 90; 92; 100) includes at least a first identification threshold (80; 90; 92; 100) and a second identification threshold (80; 90; 92; 100), the determined identification threshold is the first identification threshold for a first range of values of the acceleration, the determined identification threshold (80; 90; 92; 100) is the second identification threshold (80; 90; 92; 100) for a second range of values of the acceleration, and the first range of values is different than the second range of values.

12. The method of claim 10 or 11, wherein:
the first identification threshold (80) is an acceleration value and the second identification threshold (90; 92; 100) is a rate of change of acceleration value; or
each of the first identification threshold (90; 92; 100) and the second identification threshold (90; 92; 100) is a rate of change of acceleration value, the first identification threshold (90; 92; 100) has a first rate of change of acceleration value, the second identification threshold (90; 92; 100) has a second rate of change of acceleration value, and the first rate of change of acceleration value is different than the second rate of change of acceleration value.

13. An assembly for an aircraft propulsion system, the assembly comprising:
an engine (22) including a first rotational assembly (46) and a second rotational assembly (48), wherein the first rotational assembly (46) and the second rotational assembly (48) are concentric and configured for rotation about a rotational axis (44);
a first rotation speed sensor (72A) disposed at the first rotational assembly (46), wherein the first rotation speed sensor (72A) is configured to measure a first rotation speed of the first rotational assembly (46);
a second rotation speed sensor (72B) disposed at the second rotational assembly (48), wherein the second rotation speed sensor (72B) is configured to measure a second rotation speed of the second rotational assembly (48); and
a controller (24) including a processor (68) in communication with a non-transitory memory (70) storing instructions, which instructions when executed by the processor (68), cause the processor (68) to:
monitor a first rotational parameter of the first rotational assembly (46) and a second rotational parameter of the second rotational assembly (48) using the first rotation speed sensor (72A) and the second rotation speed sensor (72B), respectively;
determine a first identification threshold (80; 90; 92; 100) for the first rotational parameter using a first acceleration of the first rotational assembly (46), wherein the first acceleration is determined using the first rotation speed sensor (72A);
determine a second identification threshold (102) for the second rotational parameter using a second acceleration of the second rotational assembly (48), and the second acceleration is determined using the second rotation speed sensor (72B);
identify a presence or an absence of a rubbing condition for the first rotational assembly (46) by comparing the first rotational parameter to the first identification threshold (80; 90; 92; 100);
identify a presence or an absence of a rubbing condition for the second rotational assembly (48) by comparing the second rotational parameter to the second identification threshold (102); and
identify a cause of the rubbing condition for the first rotational assembly (46) and/or the second rotational assembly (48) using the identified presence or absence of the rubbing condition for the first rotational assembly (46) and the identified presence or absence of the rubbing condition for the second rotational assembly (48).

14. The assembly of claim 13, wherein:
determining the first identification threshold (80; 90; 92; 100) for the first rotational parameter includes selecting the first identification threshold (80; 90; 92; 100) from a plurality of first identification thresholds stored in memory (70) based on the first acceleration; and/or
the instructions, when executed by the processor (68), further cause the processor (68) to identify the presence or the absence of the rubbing condition for the first rotational assembly (46) for only a subset of a rotation speed range of the first rotational assembly (46).

15. The assembly of claim 13 or 14, wherein:
each of the first rotational parameter and the first identification threshold (80) are acceleration values for the first rotational assembly (46); or
the first rotational parameter and the first identification threshold (90; 92; 100) are rate of change of acceleration values for the first rotational assembly (46).
